# EUROPÄISCHE PATENTSCHRIFT

(11) **EP 2 045 015 B1**
(45) Veröffentlichungstag und Bekanntmachung des Hinweises auf die Patenterteilung: **23.11.2011**
(21) Anmeldenummer: 08164052.6
(22) Anmeldetag: 10.09.2008
(51) Int. Cl.: B01L 3/00, G01N 21/03

(54) **Mikroküvetten-Anordnung und deren Verwendung**
Micro-cuvette assembly and its utilisation
Agencement de micro-cuvettes et son utilisation

(30) Priorität: 01.10.2007 CH 15152007
(43) Veröffentlichungstag der Anmeldung: 08.04.2009
(60) Teilanmeldung: 11173230.1
(73) Patentinhaber: Tecan Trading AG, 8708 Männedorf (CH)
(72) Erfinder: GRASSL, Josef, 83471, Schönau am Königsee (DE); Schürf, Markus, 83346, Bergen / Bernhaupten (DE); Payr, Fritz, 5020, Salzburg (AT); Gotschy, Walter, 5421, Adnet (AT)
(74) Vertreter: OK pat AG

(56) Entgegenhaltungen:
- EP-A- 0 075 605
- EP-A- 0 834 729
- WO-A-02/087763
- FR-A- 2 363 098
- US-A- 4 722 598

## Beschreibung

Die Erfindung betrifft gemäss dem Oberbegriff des unabhängigen Anspruchs 1 eine Mikroküvetten-Anordnung, die eine erste Teilplatte mit einer oder mehreren ersten Küvettenflächen und eine gegenüber der ersten anordenbare, zweite Teilplatte mit mindestens einer oder mehreren zweiten Küvettenflächen umfasst. Diese zweiten Küvettenflächen sind in einer Aktivposition der Mikroküvetten-Anordnung planparallel zu den ersten Küvettenflächen im Register angeordnet und um eine Distanz von diesen beabstandet. Dadurch sind in der Aktivposition der Mikroküvetten-Anordnung eine oder mehrere Mikroküvetten ausgebildet, in denen je ein vorgängig auf eine der Küvettenflächen aufgebrachtes Flüssigkeitsvolumen zwischen diesen beiden Küvettenflächen gehalten wird. Dabei weist jede dieser Teilplatten bevorzugt je eine regelmässige Anordnung von mehreren Küvettenflächen auf, wobei speziell bevorzugt wird, dass diese regelmässigen Anordnungen von mehreren Küvettenflächen als lineares Array mit 8 Küvettenflächen oder als ein ganzzahliges Vielfaches von solchen linearen, parallel zueinander angeordneten Arrays ausgebildet sind. Die Erfindung betrifft zudem ein entsprechendes Verfahren.

Mikroplatten zum Bereitstellen von einer Vielzahl von sogenannten "virtuellen Wells" sind aus dem Stand der Technik bekannt. Beispielsweise offenbart US 6,565,813 B1 solche Mikroplatten mit einem dem Format einer Standardmikroplatt ähnlichen Format. Dabei wird auf zwei einander angenäherten Teilplatten aus Glas je ein Array von verhältnismässig wasserfreundlichen ("hydrophilen") Domänen bereitgestellt, die sich im Register gegenüberstehen. Die hydrophilen Domänen sind typischerweise von einem wasserabstossenden ("hydrophoben") Feld aus Teflon^{®} (DuPont) umgeben, welches beispielsweise mittels Siebdruck aufgebracht wird. Die Flüssigkeitsvolumina werden so zwischen den beiden hydrophilen Domänen eines solchen "virtuellen Wells" aufgespannt und am Ort gehalten. Alternative Ausführungsformen mit oxidativ hydrophilisierten Domänen für die Proben sind ebenfalls beschrieben. Diese beispielsweise zum High Throughput Screening verwendeten Mikroplatten werden bevorzugt zum Herstellen von Versuchsmischungen mit Reagenzien von sehr geringen Volumina von 100 nl bis 10 µl verwendet, deren Resultate z.B. Mittels Fluorometrie ausgewertet werden können. Allerdings eignen sich diese Mikroplatten nicht für Absorptionsmessungen, weil die Weglängen in den "virtuellen Wells" nicht genügend genau definiert ist.

Ein Photometer zum Durchführen solcher Absorptionsmessungen ist aus US 6,628,382 B2 bekannt. Zwischen zwei sich angenäherten Flächen von zwei Bauteilen wird ein Flüssigkeitstropfen auf Grund seiner Oberflächenspannung aufspannt und diesen Tropfen wird mittels in den beiden Bauteilen enthaltenen optischen Fasern durchleuchtet. Eine möglichst grosse Weglänge zum Erreichen eines möglichst grossen Messsignals bei der Durchstrahlung wird dadurch erreicht, dass der Tropfen durch eine Auseinanderbewegen der beiden Bauteile gestreckt wird. Diese Vorrichtung wird zum Durchführen von einzelnen Messungen an einer kleinen Anzahl Proben angewendet; allerdings erscheint sie zum automatisierten Ausführen von Untersuchungen an vielen Proben ungeeignet. Die Verdampfungsrate bei solchen Vorrichtungen, in denen ein einzelnes Flüssigkeitsvolumen mit grosser Höhe (Weglänge) aber sehr geringem Durchmesser untersucht wird, ist recht gross.

Diese beiden aus dem Stand der Technik bekannten Vorrichtungen zum Bereitstellen von virtuellen Wells sind einerseits recht aufwändig in der Herstellung und eigenen sich andererseits nur bedingt oder gar nicht zum automatisierten Untersuchungen einer grossen Anzahl von Flüssigkeitsproben.

Die Aufgabe der vorliegenden Erfindung ist es, eine alternative Vorrichtung bzw. ein alternatives Verfahren vorzuschlagen, welche die aus dem Stand der Technik bekannten Nachteile eliminieren oder zumindest minimieren.

Die gestellte Aufgabe wird gemäss einem ersten Aspekt durch die Merkmale des unabhängigen Anspruchs 1 gelöst, indem eine Mikroküvetten-Anordnung vorgeschlagen wird, die eine erste Teilplatte mit einer oder mehreren ersten Küvettenflächen und eine gegenüber der ersten anordenbare, zweite Teilplatte mit mindestens einer oder mehreren zweiten Küvettenflächen umfasst. Diese zweiten Küvettenflächen sind in einer Aktivposition der Mikroküvetten-Anordnung planparallel zu den ersten Küvettenflächen im Register angeordnet und um eine Distanz von diesen beabstandet. Dadurch sind in der Aktivposition der Mikroküvetten-Anordnung eine oder mehrere Mikroküvetten ausgebildet, in denen je ein vorgängig auf eine der Küvettenflächen aufgebrachtes Flüssigkeitsvolumen zwischen diesen beiden Küvettenflächen gehalten wird. Die erfindungsgemässe Mikroküvetten-Anordnung ist dadurch gekennzeichnet, dass jede der ersten Küvettenflächen der ersten Teilplatte individuell und vollständig durch eine Oberfläche je eines als freistrahloptisches Element ausgebildeten, in je einer die erste Teilplatte durchdringenden Öffnung angeordneten, transparenten Körpers gebildet ist.

Die gestellte Aufgabe wird gemäss einem zweiten Aspekt durch die Merkmale des unabhängigen Anspruchs 19 gelöst, indem ein entsprechendes Verfahren zum Untersuchen von biologischen Proben mit einer solchen Mikroküvetten-Anordnung vorgeschlagen wird. Dabei wird mindestens ein zu untersuchendes Flüssigkeitsvolumen auf eine der Küvettenflächen aufgetragen und die andere Küvettenfläche in Kontakt zu diesem Flüssigkeitsvolumen gebracht. Danach werden beide Küvettenflächen so in eine planparallele Position im Register und in einer Distanz zueinander gebracht, dass in dieser Aktivposition der Mikroküvetten-Anordnung mindestens eine Mikroküvette gebildet wird, in der das Flüssigkeitsvolumen zwischen diesen beiden Küvettenflächen gehalten wird. Das erfindungsgemässe Verfahren ist dadurch gekennzeichnet, dass jede der ersten Küvettenflächen der ersten Teilplatte individuell und vollständig durch eine Oberfläche je eines als freistrahloptisches Element ausgebildeten, in je einer die erste Teilplatte durchdringenden Öffnung angeordneten, transparenten Körpers gebildet ist, wobei jeweils einer dieser transparenten Körper und das Flüssigkeitsvolumen, das sich zwischen den zwei in einer fixen Distanz zueinander gehaltenen Küvettenflächen befindet, mit Licht durchstrahlt werden.

Zusätzliche bevorzugte und erfinderische Merkmale ergeben sich jeweils aus den abhängigen Ansprüchen.

Vorteile der erfindungsgemässen Mikroküvetten-Anordnung umfassen:
- Es werden eine oder eine grössere Anzahl von Mikroküvetten geschaffen, die alle eine genau definierte Höhe aufweisen, so dass über die dadurch präzise festgelegte optische Weglänge und die Messung der optischen Dichte das manuelle und/oder automatische Bestimmen der Konzentration eines bestimmten Inhaltsstoffes in einer Flüssigkeitsprobe gemäss dem Lambert-Beer'schen Gesetz ermöglicht wird.
- Es können Absorptionsmessungen an sehr kleinen Volumina und mit definierter Weglänge durchgeführt werden.
- Die Mikroküvetten-Anordnung kann eine zu einer Standardmikroplatte praktisch identische Grundfläche aufweisen. Sie wird dadurch zu einem Adapter, der das Durchführen von automatischen Absorptionsmessungen in Mikroküvetten mit einem Standard-Mikroplattenreader ermöglicht.
- Durch das Durchstrahlen eines grossen Teils des Volumens einer dünnen Flüssigkeitsprobe mit Licht erfolgt die Absorptionsmessung an unterschiedlichen Stellen derselben Probe. Dadurch wird eine mögliche, durch inhomogene Proben hervorgerufene Fehleranfälligkeit der Messung erheblich reduziert.
- Dank den grossen, durch die Körper der erfindungsgemässen Mikroküvetten-Anordnung bereitgestellten Küvettenflächen, wird der Einfluss der Verdunstung der Flüssigkeit einer untersuchten Probe minimiert.

Im Folgenden wird die erfindungsgemässe Mikroküvetten-Anordnung und deren Verwendung an Hand von beispielhaften und schematischen, den Umfang der Erfindung nicht einschränkenden Zeichnungen erläutert. Dabei zeigen:
- Fig. 1: eine Draufsicht auf eine offene Mikroküvetten-Anordnung gemäss einer ersten oder zweiten Ausführungsform;
- Fig. 2: einen vertikalen Schnitt durch die Mikroküvetten-Anordnung in Fig. 1, in der Aktivposition gemäss der ersten Ausführungsform;
- Fig. 3: einen vertikalen Schnitt durch die Mikroküvetten-Anordnung in Fig. 1, in der Aktivposition gemäss der zweiten Ausführungsform;
- Fig. 4: eine Draufsicht auf eine offene Mikroküvetten-Anordnung gemäss einer dritten Ausführungsform;
- Fig. 5: einen vertikalen Schnitt durch die Mikroküvetten-Anordnung in Fig. 4, in der Aktivposition gemäss der dritten Ausführungsform;
- Fig. 6: einen vertikalen Teilschnitt durch eine offene Mikroküvetten-Anordnung gemäss einer ersten und zweiten Variante der ersten und dritten Ausführungsform;
- Fig. 7: einen vertikalen Teilschnitt durch eine geschlossene und beladene Mikroküvette einer Mikroküvetten-Anordnung in der Aktivposition gemäss einer bevorzugten Variante der ersten und dritten Ausführungsform.

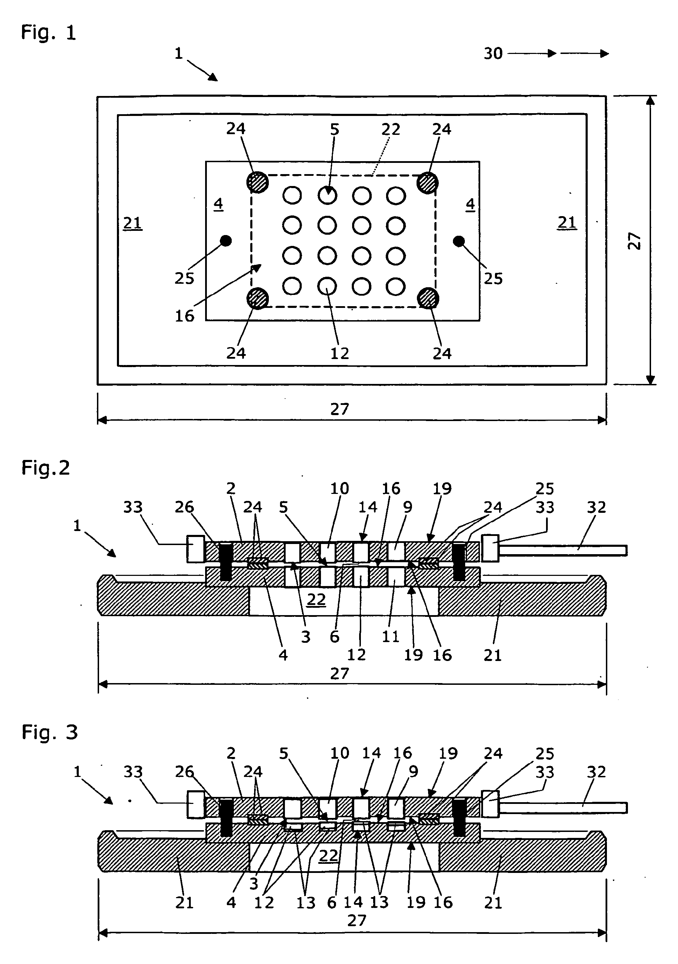

Figur 1 zeigt eine Draufsicht auf eine offene Mikroküvetten-Anordnung gemäss einer ersten oder zweiten Ausführungsform. Die Mikroküvetten-Anordnung 1 umfasst eine erste Teilplatte 2 mit einer oder mehreren ersten Küvettenflächen 3 und eine gegenüber der ersten anordenbare, zweite Teilplatte 4 mit mindestens einer oder mehreren zweiten Küvettenflächen 5. Diese zweiten Küvettenflächen 5 sind in einer Aktivposition der Mikroküvetten-Anordnung 1 (vgl. Fig. 2) planparallel zu den ersten Küvettenflächen 3 im Register angeordnet und um eine Distanz 6 von diesen beabstandet. Dadurch wird in der Aktivposition der Mikroküvetten-Anordnung 1 eine oder mehrere Mikroküvetten 7 ausgebildet, in denen je ein vorgängig auf eine der Küvettenflächen 3,5 aufgebrachtes Flüssigkeitsvolumen 8 zwischen diesen beiden Küvettenflächen 3,5 gehalten wird. Dieses Halten eines Flüssigkeitsvolumens 8 zwischen den beiden sich gegenüber liegenden Küvettenflächen 3,5 der beiden Teilplatten 2,4 der Mikroküvetten-Anordnung 1 beruht vorzugsweise auf der Oberflächenspannung dieses Flüssigkeitsvolumens 8. Dabei werden die beiden Küvettenflächen 3,5 durch die Flüssigkeit benetzt. Jede der ersten Küvettenflächen 3 der ersten Teilplatte 2 ist gemäss der vorliegenden Erfindung individuell und vollständig durch eine Oberfläche je eines als freistrahloptisches Element ausgebildeten, in je einer die erste Teilplatte 2 durchdringenden Öffnung 9 angeordneten, transparenten Körpers 10 gebildet (vgl. Figuren 1-7).

Im Zusammenhang mit der Erfindung gilt, dass die Nummerierung dieser Teilplatten willkürlich ist, und dass die speziellen Anordnungen untereinander vertauschbar sind und als entsprechend alternative Ausführungsformen beansprucht werden. So kann (wie in Fig. 1 dargestellt) die erste Teilplatte 2 gegenüber der zweiten Teilplatte 4 anordenbar sein. Tatsächlich ist in Figur 1 nur die zweite Teilplatte 4 dargestellt, um die Draufsicht auf die Küvettenflächen 5 der als freistrahloptisches Element ausgebildeten, transparenten Körper 10 zu ermöglichen. Der transparente Körper 10 ist vorzugsweise aus einem Material gebildet, das aus einer Gruppe ausgewählt ist, welche Glas, Quarzglas, Kunststoff und Keramik umfasst, das für die verwendeten elektromagnetischen Wellen durchlässig ist und einen Brechungsindex aufweist, welcher die Verwendung als freistrahloptisches Element zulässt.

Wie jedem Fachmann bekannt ist, beruht eine Freistrahloptik auf dem Prinzip der freien Ausbreitung von Lichtstrahlen, welche durch Linsen und andere klassische optische Elemente eine bewusste Führung erfahren. Im Gegensatz zur Freistrahloptik beruht eine Faseroptik, wie diese beispielsweise aus US 6,628,382 B2 bekannt ist, auf dem Prinzip der Totalreflexion im Inneren eines Lichtleiters. Die Verwendung von freistrahloptischen transparenten Körpern 10 erlaubt das Bestrahlen der Proben mit einer Beleuchtung, die einen grossen Querschnitt aufweist; zudem ist die Divergenz der Lichtstrahlen beim Austritt aus den freistrahloptischen, transparenten Körpern 10 einstellbar und in keinem Fall so gross wie bei einer Faseroptik.

Als "Mikroplatten" werden im Zusammenhang mit der vorliegenden Erfindung alle Multiwellplatten bezeichnet, die eine Vielzahl an Wells oder Behälter aufweisen, welche in einem Array angeordnet sind. Speziell bevorzugte Mikroplatten weisen zumindest annähernd die Masse und den Footprint (Grundfläche) einer Mikroplatte nach dem SBS Standard auf, wie dieser vom American National Standards Institute (ANSI) veröffentlicht wurde. Wenngleich viele unterschiedliche Formen und Dimensionen von Wells bekannt sind, so ist doch allen Standardmikroplatten gemeinsam, dass sie eine normierte Grundfläche, also einen normierten Footprint aufweisen, und dass der Achsabstand der jeweils in einem Array angeordneten Wells ebenfalls normiert ist. Dieser Achsabstand beträgt z.B. bei 24-Well (4 x 6) Platten 18 mm, bei 96-Well (8 x 12) Platten 9 mm und bei 384-Well (16 x 24) Platten 4.5 mm. Alle diese Standardmikroplatten sind aus Kunststoff gefertigte Verbrauchsartikel und werden üblicherweise nur einmal verwendet und dann entsorgt.

In der in Fig. 1 gezeigten, ersten Ausführungsform der Erfindung ist jede der zweiten Küvettenflächen 5 der zweiten Teilplatte 4 individuell und vollständig durch eine Oberfläche je eines als freistrahloptisches Element ausgebildeten, in je einer die zweite Teilplatte 4 durchdringenden Öffnung 11 angeordneten, transparenten Körpers 12 gebildet (vgl. auch Fig. 2).

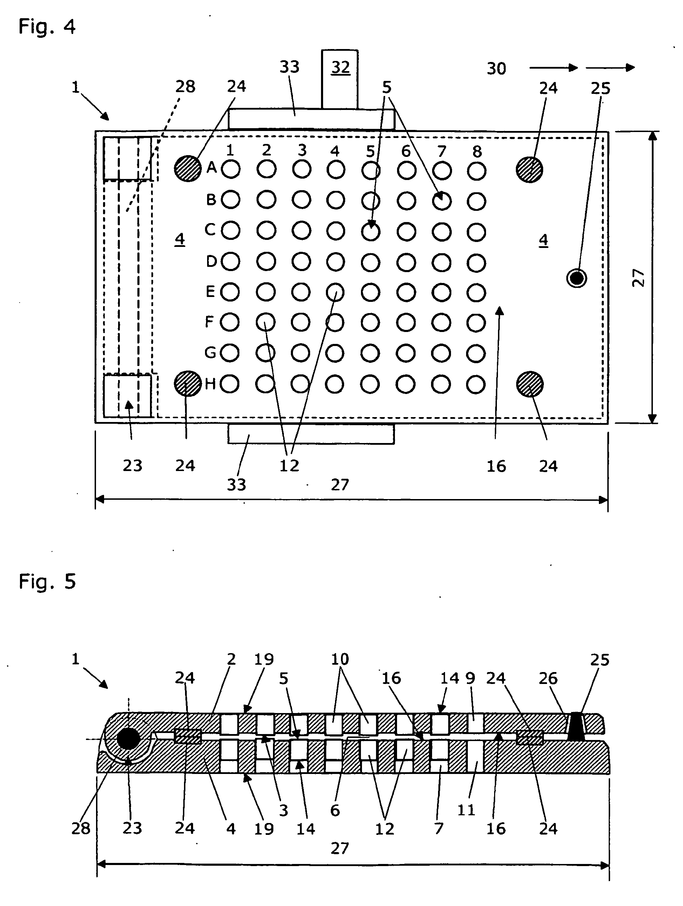

Vorzugsweise bestehen alle transparenten Körper 10,12 aus Quarzglas, so dass die Durchstrahlung der transparenten Körper 10,12 mit Licht einer Wellenlänge von 200 bis 1000 nm möglich ist. Besonders bevorzugt sind die transparenten Körper 10,12 im wesentlichen zylindrisch ausgebildet; dabei bestehen die Küvettenflächen 3 der ersten Teilplatte 2 oder die Küvettenflächen 3,5 der ersten und zweiten Teilplatten 2,4 aus ersten Kreisflächen solcher Zylinder (vgl. auch Fig. 5). Alternativ können die transparenten Körper 10 auch aus einem Material gebildet sein, das aus einer Gruppe ausgewählt ist, welche Glas, Kunststoff und Keramik umfasst, für die verwendeten elektromagnetischen Wellen durchlässig ist und einen Brechungsindex aufweist, welcher die Verwendung als freistrahloptisches Element zulässt.

Die ersten und zweiten Ausführungsformen der erfindungsgemässen Mikroküvetten-Anordnung 1 umfassen je eine Basisplatte 21 mit einer Aussparung 22 (vgl. Fig. 2 und 3), wobei die zweite Teilplatte 4 als diese Aussparung 22 überspannend ausgebildet und an der Basisplatte 21 fixiert ist. Die Küvettenflächen 3 der zweiten Teilplatte 4 sind im Bereich dieser Aussparung 22 (gestrichelt gezeichnet in Fig. 1) angeordnet.

Bevorzugt umfassen die erste und zweite Teilplatte 2,4 Distanzhalter 24, welche so zum gegenseitigen Beaufschlagen ausgebildet sind, dass in der Aktivposition der Mikroküvetten-Anordnung 1 die fixe Distanz 6 zwischen allen einander gegenüber stehenden Küvettenflächen 3,5 einer Mikroküvetten-Anordnung 1 definiert ist. Zum definieren einer genügend exakten Register-Position der Küvettenflächen 3,5 umfasst die zweite Teilplatte 4 vorzugsweise Führungsstifte 25, welche in der Aktivposition der Mikroküvetten-Anordnung 1 in entsprechende Vertiefungen 26 der ersten Teilplatte 2 eintauchend ausgebildet sind.

Um die automatisierte Verwendung der Mikroküvetten-Anordnung 1 in einem Standard-Mikroplattenreader zu ermöglichen, weist die erfindungsgemässe Mikroküvetten-Anordnung 1 bevorzugt eine zu einer Standardmikroplatte praktisch identische Grundfläche 27 auf. Zumindest soll, gemäss einer ersten und zweiten Ausführungsform der erfindungsgemässen Mikroküvetten-Anordnung 1, die Basisplatte 21 eine Grundfläche 27 aufweisen, die zumindest annähernd der Grundfläche einer Standardmikroplatte entspricht.

Wie aus der Figur 1 ersichtlich ist, umfasst die zweite Teilplatte 4 eine regelmässige Anordnung von mehreren Küvettenflächen 5. Dargestellt ist ein 4 x 4 Array. Bevorzugt sind hingegen regelmässige Anordnungen von mehreren Küvettenflächen 5 als lineares Array mit 8 oder 12 Küvettenflächen 5. Besonders bevorzugt sind dabei ganzzahlige Vielfache von solchen linearen, parallel zueinander angeordneten Arrays, so dass sich zwei oder mehr parallele Reihen von 8 oder 12 Küvettenflächen 5 ergeben. Speziell bevorzugt sind solche Arrays von Küvettenflächen 5, die einen regelmässigen Achsabstand entsprechend dem Achsabstand der Wells von Standardmikroplatten aufweisen (vgl. Fig. 4).

Figur 2 zeigt einen vertikalen Schnitt durch die Mikroküvetten-Anordnung in Fig. 1, in der Aktivposition gemäss der ersten Ausführungsform. Die erste Teilplatte 2 der Mikroküvetten-Anordnung 1 mit mehreren ersten Küvettenflächen 3 liegt auf der zweiten Teilplatte 4 mit der gleichen Anzahl von zweiten Küvettenflächen 5. In dieser Aktivposition der Mikroküvetten-Anordnung 1 sind die beiden Küvettenflächen 3,5 einer Mikroküvette 7 planparallel zu einander und im Register angeordnet sowie um eine Distanz 6 von einander beabstandet. Ein vorgängig auf eine der Küvettenflächen 5 mittels einer Pipette von Hand unter Verwendung eines Liquidhandling Systems aufgebrachtes Flüssigkeitsvolumen 8 wird in dieser Mikroküvette 7 zwischen diesen beiden Küvettenflächen 3,5 gehalten (vgl. Figuren 1-7).

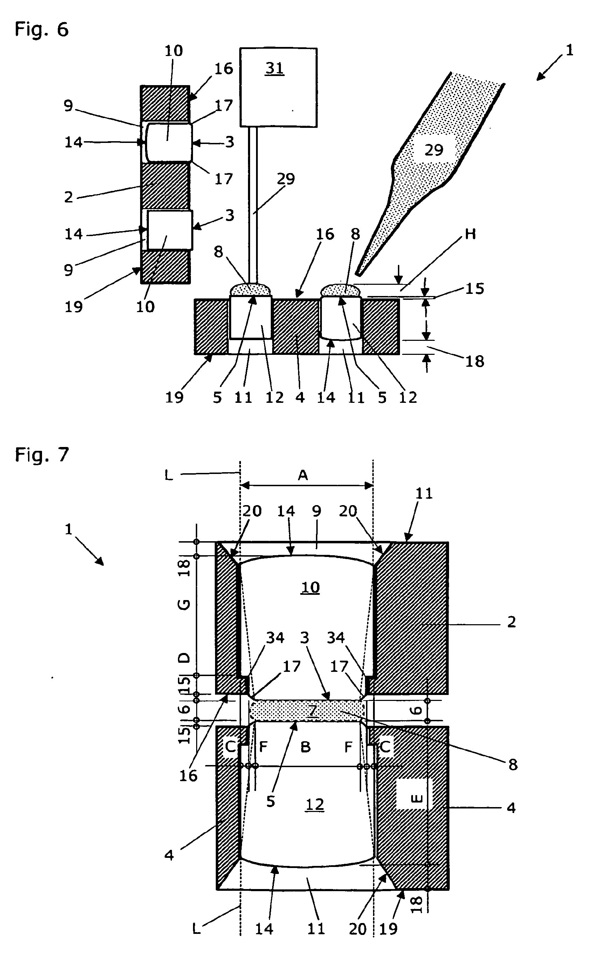

Die erste Ausführungsform der Mikroküvetten-Anordnung 1 ist dadurch gekennzeichnet, dass jede der ersten Küvettenflächen 3 der ersten Teilplatte 2 und der zweiten Küvettenflächen 5 der zweiten Teilplatte 4 individuell und vollständig durch eine Oberfläche je eines als freistrahloptisches Element ausgebildeten, in je einer die erste Teilplatte 2 oder die zweite Teilplatte 4 durchdringenden Öffnung 9,11 angeordneten, transparenten Körpers 10,12 gebildet ist. In der Figur 2 wurden die transparenten Körper 10,12 in den ganz rechts angeordneten Öffnungen 9,11 in der ersten und zweiten Teilplatte 2,4 weggelassen, um zu zeigen, dass diese Öffnungen 9,11 die Teilplatten 2,4 vollständig durchdringen. Eine vergrösserte Darstellung dieses Querschnitts ist in der Figur 7 dargestellt.

Figur 2 zeigt zudem, wie ein Robotergreifer 33 eines Roboters 32 verwendet wird, um die erste Teilplatte 2 auf der zweiten Teilplatte 4 zu positionieren und/oder um die erste Teilplatte 2 von der zweiten Teilplatte 4 abzuheben. Die erste Ausführungsform der erfindungsgemässen Mikroküvetten-Anordnung 1 umfasst eine Basisplatte 21 mit einer Grundfläche 27, die zumindest annähernd der Grundfläche einer Standardmikroplatte entspricht.

Figur 3 zeigt einen vertikalen Schnitt durch die Mikroküvetten-Anordnung in Fig. 1, in der Aktivposition gemäss der zweiten Ausführungsform. Wie schon bei der ersten Ausführungsform liegt die erste Teilplatte 2 der Mikroküvetten-Anordnung 1 mit mehreren ersten Küvettenflächen 3 auf der zweiten Teilplatte 4 mit der gleichen Anzahl von zweiten Küvettenflächen 5. Auch in dieser Aktivposition der Mikroküvetten-Anordnung 1 sind die beiden Küvettenflächen 3,5 einer Mikroküvette 7 planparallel zu einander und im Register angeordnet sowie um eine Distanz 6 von einander beabstandet. Ein vorgängig auf eine der Küvettenflächen 5 mittels einer Pipette von Hand oder unter Verwendung eines Liquidhandling Systems aufgebrachtes Flüssigkeitsvolumen 8 wird in dieser Mikroküvette 7 zwischen diesen beiden Küvettenflächen 3,5 gehalten.

Die zweite Ausführungsform der Mikroküvetten-Anordnung 1 ist dadurch gekennzeichnet, dass jede der ersten Küvettenflächen 3 der ersten Teilplatte 2 individuell und vollständig durch eine Oberfläche je eines als freistrahloptisches Element ausgebildeten, in je einer die erste Teilplatte 2 durchdringenden Öffnung 9 angeordneten, transparenten Körpers 10 gebildet ist, und dass jede der zweiten Küvettenflächen 5 der zweiten Teilplatte 4 individuell und vollständig durch eine Oberfläche je eines in der zweiten Teilplatte 4 angeordneten Spiegels 13 gebildet ist. Jeder dieser Spiegel 13 ist an der Küvettenfläche 5 verspiegelt oder er umfasst einen als freistrahloptisches Element ausgebildeten, transparenten Körper 12, der eine verspiegelte Rückseite 14 aufweist.

Wie gesagt umfassen die ersten und zweiten Ausführungsformen der erfindungsgemässen Mikroküvetten-Anordnung 1 je eine Basisplatte 21 mit einer Aussparung 22 (vgl. Fig. 2 und 3), wobei die zweite Teilplatte 4 als diese Aussparung 22 überspannend ausgebildet und an der Basisplatte 21 fixiert ist. Die Küvettenflächen 3 der zweiten Teilplatte 4 sind im Bereich dieser Aussparung 22 (gestrichelt gezeichnet in Fig. 1) angeordnet.

Auch in der zweiten Ausführungsform wird bevorzugt, dass alle transparenten Körper 10,12 aus Quarzglas bestehen, so dass die Durchstrahlung der transparenten Körper 10,12 mit Licht einer Wellenlänge von 200 bis 1000 nm möglich ist. Besonders bevorzugt sind die transparenten Körper 10,12 im wesentlichen zylindrisch ausgebildet; dabei bestehen die Küvettenflächen 3 der ersten Teilplatte 2 oder die Küvettenflächen 3,5 der ersten und zweiten Teilplatten 2,4 aus ersten Kreisflächen solcher Zylinder (vgl. auch Fig. 5). Dies trifft auch für Spiegel 13 zu, falls diese einen rückseitig verspiegelten transparenten Körper 10 umfassen (vgl. die linken beiden Spiegel 13 in Fig. 2). Gleichfalls ist bevorzugt, dass alle Spiegel 13, unabhängig davon, ob diese an ihrer Vorderseite (vgl. die rechten beiden Spiegel 13 in Fig. 2) oder Rückseite verspiegelt sind, eine kreisförmige Küvettenfläche 5 definieren.

Der in Figur 3 gezeigte Robotergreifer 33 eines Roboters 32 kann auch dazu verwendet werden, um die Grundplatte 21 mit der zweiten Teilplatte 4 auf der Oberfläche eines Arbeitsplatzes (z.B. auf der Oberfläche eines Mikroplatten-Carriers einer Workstation) zu positionieren und/oder um die Grundplatte 21 mit der ersten und zweiten Teilplatte 2,4 von der Oberfläche eines Arbeitsplatzes abzuheben und in einen Standard-Mikroplattenreader zu übergeben. Dies ist auch deshalb möglich, weil die zweite Ausführungsform der erfindungsgemässen Mikroküvetten-Anordnung 1 eine Basisplatte 21 mit einer Grundfläche 27 umfasst, die zumindest annähernd der Grundfläche einer Standardmikroplatte entspricht.

Figur 4 zeigt eine Draufsicht auf eine offene Mikroküvetten-Anordnung gemäss einer dritten Ausführungsform. Die zweite Teilplatte 4 der Mikroküvetten-Anordnung 1 umfasst hier 64 zweite Küvettenflächen 5. Die gegenüber dieser zweiten Teilplatte 4 anordenbare, erste Teilplatte 2 wurde entfernt und ist hier nur gestrichelt gezeichnet. Selbstverständlich weisen beide Teilplatten 2,4 die gleiche Anzahl und Verteilung von ersten und zweiten Küvettenflächen 3,5 auf, die in einer Aktivposition der Mikroküvetten-Anordnung 1 (vgl. Fig. 5) planparallel zu einander im Register angeordnet und um eine Distanz 6 voneinander beabstandet sind. Dadurch werden in der Aktivposition dieser hier dargestellten Mikroküvetten-Anordnung 1 64 Mikroküvetten 7 ausgebildet, in denen je ein vorgängig auf eine der Küvettenflächen 3,5 aufgebrachtes Flüssigkeitsvolumen 8 zwischen diesen beiden Küvettenflächen 3,5 gehalten wird.

Die dritte Ausführungsform der Mikroküvetten-Anordnung 1 ist dadurch gekennzeichnet, dass jede der ersten Küvettenflächen 3 der ersten Teilplatte 2 und der zweiten Küvettenflächen 5 der zweiten Teilplatte 4 individuell und vollständig durch eine Oberfläche je eines als freistrahloptisches Element ausgebildeten, in je einer die erste Teilplatte 2 oder die zweite Teilplatte 4 durchdringenden Öffnung 9,11 angeordneten, transparenten Körper 10,12 gebildet ist. Die dritte Ausführungsform der erfindungsgemässen Mikroküvetten-Anordnung 1 umfasst eine erste Teilplatte 2 und eine zweite Teilplatte 4, die über ein Gelenk 23 mit einer Achse 28 miteinander verbunden sind, mittels welchem eine dieser Teilplatten 2,4 zum Erstellen der Aktivposition der Mikroküvetten-Anordnung 1 auf die andere Teilplatte 4,2 schwenkbar ist.

Bevorzugt umfasst die erste und zweite Teilplatte 2,4 Distanzhalter 24, welche so zum gegenseitigen Beaufschlagen ausgebildet sind, dass in der Aktivposition der Mikroküvetten-Anordnung 1 die fixe Distanz 6 zwischen allen einander gegenüber stehenden Küvettenflächen 3,5 einer Mikroküvetten-Anordnung 1 definiert ist. Vorzugsweise umfasst die zweite Teilplatte 4 Führungsstifte 25, welche in der Aktivposition der Mikroküvetten-Anordnung 1 in entsprechende Vertiefungen 26 der ersten Teilplatte 2 eintauchend ausgebildet sind. Besonders bevorzugt weist die zweite Teilplatte 4 eine Grundfläche 27 auf, die zumindest annähernd der Grundfläche einer Standardmikroplatte entspricht.

Wie aus der Figur 4 ersichtlich ist, umfasst die zweite Teilplatte 4 eine regelmässige Anordnung von mehreren Küvettenflächen 5. Dargestellt ist ein 8 x 8 Array. Bevorzugt sind hingegen regelmässige Anordnungen von mehreren Küvettenflächen 5 als lineares Array mit 8 oder 12 Küvettenflächen 5. Besonders bevorzugt sind dabei ganzzahlige Vielfache von solchen linearen, parallel zueinander angeordneten Arrays, so dass sich zwei oder mehr parallele Reihen von 8 oder 12 Küvettenflächen 5 ergeben. Speziell bevorzugt sind solche Arrays von Küvettenflächen 5, die einen regelmässigen Achsabstand entsprechend dem Achsabstand der Wells von Standardmikroplatten aufweisen. Entsprechend der Bezeichnung der Wells einer Standardmikroplatte können deshalb wie gezeigt auch die Küvettenflächen 5, auf welchen die Flüssigkeitsvolumina 8 deponiert werden sollen, in Kolonnen 1-8 oder 1-12 (nicht gezeigt) und in Reihen A-H identifiziert werden.

Der in Figur 4 gezeigte Robotergreifer 33 eines Roboters 32 kann auch dazu verwendet werden, um die Mikroküvetten-Anordnung 1 auf der Oberfläche eines Arbeitsplatzes (z.B. auf der Oberfläche eines Mikroplatten-Carriers einer Workstation) zu positionieren, wo die Flüssigkeitsvolumina mittels eines Liquidhandling Systems 31 (vgl. Fig. 6) auf die Küvettenflächen 5 abgegeben werden können. Zudem können solche Mikroküvetten-Anordnungen 1 mit dem Robotergreifer 33 des Roboters 32 in einen Standard-Mikroplattenreader 30 (siehe Doppelpfeil) übergeben werden, wo Absorptionsmessungen an den in den Mikroküvetten 7 gehaltenen Flüssigkeitsvolumina 8 durchgeführt werden können. Dies ist auch deshalb möglich, weil die dritte Ausführungsform der erfindungsgemässen Mikroküvetten-Anordnung 1 eine zweite Teilplatte 4 mit einer Grundfläche 27 umfasst, die zumindest annähernd der Grundfläche einer Standardmikroplatte entspricht. Mit der erfindungsgemässen Mikroküvetten-Anordnung 1 können auch Lumineszenzmessungen und/oder Fluoreszenzmessungen in sehr kleinen Flüssigkeitsvolumina 8 von üblicherweise 1 µl bis 10 µl, speziell bevorzugt von 2 µl, durchgeführt werden.

Figur 5 zeigt einen vertikalen Schnitt durch die Mikroküvetten-Anordnung in Fig. 4, in der Aktivposition gemäss der dritten Ausführungsform. Auch hier wurden die transparenten Körper 10,12 in den ganz rechts angeordneten Öffnungen 9,11 in der ersten und zweiten Teilplatte 2,4 weggelassen, um zu zeigen, dass diese Öffnungen 9,11 die Teilplatten 2,4 vollständig durchdringen. Eine vergrösserte Darstellung dieses Querschnitts ist in der Figur 7 dargestellt. Die Elemente der hier gezeigten dritten Ausführungsform entsprechend weitestgehend den Elemente der ersten Ausführungsform (vgl. Fig. 2) und sind weiter oben näher beschrieben.

Abweichend von der Darstellung in Fig. 5 und in Anlehnung an Fig. 3 ist eine weitere Variante der erfindungsgemässen Mikroküvetten-Anordnung 1 vorstellbar (nicht gezeigt), gemäss welcher jede der ersten Küvettenflächen 3 der ersten Teilplatte 2 individuell und vollständig durch eine Oberfläche je eines als freistrahloptisches Element ausgebildeten, in je einer die erste Teilplatte 2 durchdringenden Öffnung 9 angeordneten, transparenten Körpers 10 gebildet ist, wobei jede der zweiten Küvettenflächen 5 der zweiten Teilplatte 4 individuell und vollständig durch eine Oberfläche je eines in der zweiten Teilplatte 4 angeordneten Spiegels 13 gebildet ist. Jeder dieser Spiegel 13 ist an der Küvettenfläche 5 verspiegelt oder er umfasst einen als freistrahloptisches Element ausgebildeten transparenten Körper 12, der eine verspiegelte Rückseite 14 aufweist.

Figur 6 zeigt einen vertikalen Teilschnitt durch eine offene Mikroküvetten-Anordnung gemäss einer ersten und zweiten Variante der ersten und dritten Ausführungsform, wie diese bereits beschrieben wurden. An Hand dieser Figur soll aufgezeigt werden, dass eine weitestgehend symmetrische Anordnung der beiden als freistrahloptisches Element ausgebildeten, transparenten Körper 10,12 angestrebt wird. Um sicher zu stellen, dass eine Mikroküvette 7 mit einer bevorzugten Höhe von 0.5 mm gut gefüllt wird, sollen beim Einnehmen der Aktivposition der beiden Teilplatten 2,4 einer Mikroküvetten-Anordnung 1, beide Küvettenflächen 3,5 einer Mikroküvette 7 praktisch vollständig benetzt werden. Die Tropfenhöhe H, die eine Flüssigkeitsvolumen 8 nach dem Auftragen auf eine Küvettenfläche 3,5 haben soll, beträgt deshalb etwas mehr als die 0.5 mm der Distanz 6; bevorzugt wird eine Tropfenhöhe H von ca. 0.6 mm. Wie angedeutet kann das Aufbringen der Flüssigkeitsvolumina 8 auf die Küvettenflächen 3,5 mittels einer Handpipette oder automatisiert mittels einer Pipette 29 eines Liquidhandling Systems 31 erfolgen.

Zudem werden hier speziell bevorzugte Ausführungsdetails offenbart. Diese umfassen die speziell bevorzugte Bedingung, dass die Küvettenflächen 3,5 der transparenten Körper 10,12 und der Spiegel 13 um ein Überstehmass 15 über die an diese optischen Elemente angrenzenden, ersten Oberflächen 16 der Teilplatten 2,4 herausstehen. Es wurde überraschenderweise festgestellt, dass ein Überstehmass 15 von wenigen Hunderstelmillimeter, insbesondere von 0.05 mm, genügt, um zu verhindern, dass ein auf eine Küvettenfläche 3,5 aufgetragenes Flüssigkeitsvolumen 8 diese Küvettenfläche 3,5 spontan wieder verlässt. Ganz speziell trifft diese Beobachtung zu, wenn die transparenten Körper 10,12 aus Quarzglas bestehen und wenn die ersten Oberflächen 16 der Teilplatten 2,4 aus eloxiertem Aluminium bestehen; dabei wird die Wahl eines schwarz matt eloxierten Aluminiums bzw. einer schwarz matt eloxierten Aluminiumlegierung besonders bevorzugt. Diese Beobachtung ist umso erstaunlicher, weil es sich gezeigt hat, dass die eloxierte Aluminiumoberfläche hydrophiler ist im Vergleich zur hydrophoberen, feinpolierten Quarzoberfläche der transparenten Körper 10,12. Die Anordnung eines solchen Überstehmasses 15 hat zudem den Vorteil, dass beim Feinschleifen und Feinpolieren der Küvettenflächen 3,5 der transparenten Körper 10,12 keine Teilchen aus der jeweiligen Teilplatte, 2,4 ausgebrochen und auf die transparenten Körper übertragen werden können.

Um die Reinigung der Küvettenflächen 3,5 der transparenten Körper 10,12 einfacher durchführen zu können, weisen die Küvettenflächen 3,5 der transparenten Körper 10,12 und der Spiegel 13 bevorzugt eine gebrochene Kante 17 auf, die als umlaufende Fase oder Rundung ausgebildet ist. So kann verhindert werden, dass sich beim Abwischen der Küvettenflächen 3,5 an einer scharfen Kante Fussel bilden, welche dann zusätzlich wieder von den Küvettenflächen 3,5 entfernt werden müssen. Trotz dem Brechen der Kante 17 verbleiben eine Küvettenfläche 3,5 aufgetragene Flüssigkeitsvolumina 8 auf dieser Küvettenfläche 3,5. Bevorzugt beträgt das Überstehmass 15 von 0.05 mm und der Kantenbruch ist vorzugsweise als 45°-Fase über das ganze Überstehmass ausgebildet.

Um zu verhindern, dass beim Hantieren mit der erfindungsgemässen Mikroküvetten-Anordnung 1 auf den Rückseiten 14 der transparenten Körper 10,12 Fettspuren von Fingerabdrücken oder auch Kratzer entstehen können, werden diese transparenten Körper 10,12 bevorzugt so in den Teilplatten 2,4 montiert, dass ihre Rückseite 14 um ein Rücksprungmass 18 gegenüber einer zweiten Oberfläche 19 einer der beiden Teilplatten 2,4 abgesetzt ist. Dieses Rücksprungmass 18 beträgt vorzugsweise etwa 1.1 mm.

Figur 7 zeigt einen vertikalen Teilschnitt durch eine geschlossene und beladene Mikroküvette einer Mikroküvetten-Anordnung in der Aktivposition gemäss einer bevorzugten Variante der ersten und dritten Ausführungsform. Die hier gezeigte Mikroküvetten-Anordnung 1 umfasst eine erste Teilplatte 2 mit einer ersten Küvettenfläche 3 und eine gegenüber der ersten anordenbare, zweite Teilplatte 4 mit einer zweiten Küvettenfläche 5, die in einer Aktivposition der Mikroküvetten-Anordnung 1 planparallel zu der ersten Küvettenfläche 3 im Register angeordnet und um eine Distanz 6 von dieser beabstandet ist, wodurch in der Aktivposition der Mikroküvetten-Anordnung 1 eine Mikroküvette 7 ausgebildet ist, in der ein vorgängig auf die Küvettenfläche 5 aufgebrachtes Flüssigkeitsvolumen 8 zwischen diesen beiden Küvettenflächen 3,5 gehalten wird. Die Flüssigkeitsvolumina 8 der erfindungsgemässen Mikroküvetten-Anordnung 1 betragen üblicherweise 1 µl bis 10 µl, speziell bevorzugt sind Flüssigkeitsvolumina 8 von 2 µl.

Die erste Küvettenfläche 3 der ersten Teilplatte 2 ist individuell und vollständig durch eine Oberfläche eines als freistrahloptisches Element ausgebildeten, in einer die erste Teilplatte 2 durchdringenden Öffnung 9 angeordneten, transparenten Körpers 10 gebildet. Ebenso ist in dieser symmetrischen Anordnung die zweite Küvettenfläche 5 der zweiten Teilplatte 4 individuell und vollständig durch eine Oberfläche eines als freistrahloptisches Element ausgebildeten, in einer die zweite Teilplatte 4 durchdringenden Öffnung 11 angeordneten transparenten Körpers 12 gebildet.

Beide transparenten Körper 10,12 bestehen aus Quarzglas (vorzugsweise SQ2 von SCHOTT AG, D-55122 Mainz, Deutschland) und sind im wesentlichen zylindrisch ausgebildet, wobei die Küvettenfläche 3 der ersten Teilplatte 2 und die Küvettenfläche 5 der zweiten Teilplatte 4 aus ersten Kreisflächen solcher Zylinder besteht. Die Teilplatten sind aus eloxiertem Aluminium bzw. einer eloxierten Aluminiumlegierung gefertigt, vorzugsweise aus schwarz matt eloxiertem AlMg4,5Mn.

Die Küvettenflächen 3,5 der transparenten Körper 10,12 stehen bevorzugt um ein Überstehmass 15 von 0.05 mm über die an diese optischen Elemente angrenzenden, ersten Oberflächen 16 der Teilplatten 2,4 heraus und weisen eine gebrochene Kante 17 auf, die als umlaufende 45°-Fase ausgebildet ist. Diese transparenten Körper 10,12 sind so in den Teilplatten 2,4 montiert, dass ihre Rückseite 14 um ein Rücksprungmass 18 von 1.1 mm gegenüber einer zweiten Oberfläche 19 einer der beiden Teilplatten 2,4 abgesetzt ist. Die transparenten Körper 10,12 umfassen eine Rückseite 14, die eine Linsenform aufweist, wodurch auf die Rückseite 14 der transparenten Körper 10,12 eingestrahltes Licht L auf dessen Küvettenfläche 3,5 konzentriert wird. Somit weisen beide transparenten Körper identische freistrahloptische Merkmale auf, wie z.B. eine Eintrittsöffnung A (mit einem bevorzugten Durchmesser von 2.5 mm) für in den transparenten Körper 10,12 einfallendes Licht und eine Austrittsöffnung B (mit einem bevorzugten Durchmesser von 2.0 mm) für aus dem transparenten Körper 10,12 in die Mikroküvette 7 eintretendes Licht, wobei die Austrittsöffnung gerade der Küvettenfläche 3,5 entspricht.

In der Figur 7 entsprechen die Bezugszeichen speziell bevorzugten Massen der erfindungsgemässen transparenten Körper 10,12, wobei C der Auskragung bzw. dem Mass von 0.15 mm eines Kragens 34 entspricht, welcher in den Teilplatten 2,4 ausgeformt ist und welcher der Positionierung der transparenten Körper 10,12 in den Öffnungen 9,11 der Teilplatten 2,4 dient. Die Kragentiefe D beträgt hier 0.5 mm. Die Höhe E der transparenten Körper beträgt ca. 4 mm. Die 45°-Fase misst 0.05 mm. Der zylinderförmige Teil des transparenten Körpers ist 3.0 mm hoch. Die Distanz 6 misst hier 0.5 mm mit einer maximalen Toleranz von +/- 5/1000 mm. Die Öffnungen 9,11, welche die erste oder die zweite Teilplatte 2,4 durchdringen, umfassen je einen Konus 20, welcher an die Rückseite 10 der transparenten Körper 10,12 anschliesst.

Die bisher beschriebene, erfindungsgemässe Mikroküvetten-Anordnung 1 eignet sich vorzüglich zur Durchführung eines Verfahrens zum Untersuchen von biologischen Proben. Bei diesem Verfahren wird mindestens ein zu untersuchendes Flüssigkeitsvolumen 8 auf eine der Küvettenflächen 3,5 aufgetragen und die andere Küvettenfläche 5,3 in Kontakt zu diesem Flüssigkeitsvolumen 8 gebracht. Danach werden beide Küvettenflächen 3,5 so in eine planparallele Position im Register und in einer Distanz 6 zueinander gebracht, dass in dieser Aktivposition der Mikroküvetten-Anordnung 1 mindestens eine Mikroküvette 7 gebildet wird, in der das Flüssigkeitsvolumen 8 zwischen diesen beiden Küvettenflächen 3,5 gehalten wird.

Das erfindungsgemässe Verfahren ist dadurch gekennzeichnet, dass jede der ersten Küvettenflächen 3 der ersten Teilplatte 2 individuell und vollständig durch eine Oberfläche je eines als freistrahloptisches Element ausgebildeten, in je einer die erste Teilplatte 2 durchdringenden Öffnung 9 angeordneten, transparenten Körpers 10 gebildet ist, wobei jeweils einer dieser transparenten Körper 10 und das Flüssigkeitsvolumen 8, das sich zwischen den zwei in einer fixen Distanz 6 zueinander gehaltenen Küvettenflächen 3,5 befindet, mit Licht durchstrahlt werden.

Falls jede der zweiten Küvettenflächen 5 der zweiten Teilplatte 4 individuell und vollständig durch eine Oberfläche je eines als freistrahloptisches Element ausgebildeten, in je einer die zweite Teilplatte 4 durchdringenden Öffnung 11 angeordneten, transparenten Körpers 12 gebildet ist, werden jeweils beide transparenten Körper 10,12 und das Flüssigkeitsvolumen 8, das sich zwischen den zwei in einer fixen Distanz 6 zueinander gehaltenen Küvettenflächen 3,5 einer Mikroküvetten-Anordnung 1 befindet, mit Licht in einer Richtung durchstrahlt. Bei diesem speziellen Verfahren entsprechend einer ersten Ausführungsform beträgt somit die Weglänge des Lichts im zu untersuchenden Flüssigkeitsvolumen 8 von 0.5 mm.

Falls jede der zweiten Küvettenflächen 5 der zweiten Teilplatte 4 individuell und vollständig durch eine Oberfläche je eines in der zweiten Teilplatte 4 angeordneten Spiegels 13 gebildet ist, wird jeweils zumindest ein transparenter Körper 10 und das Flüssigkeitsvolumen 8, das sich zwischen den zwei in einer fixen Distanz 6 zueinander gehaltenen Küvettenflächen 3,5 einer Mikroküvetten-Anordnung 1 befindet, mit Licht in zwei Richtungen durchstrahlt werden. Dieses spezielle Verfahren entsprechend einer zweiten Ausführungsform verdoppelt somit die Weglänge des Lichts im zu untersuchenden Flüssigkeitsvolumen 8 auf total 1.0 mm. Dadurch ergibt sich beim Durchführen von Absorptionsmessungen ein verbessertes Signal/Rausch-Verhältnis, insbesondere bei Proben mit geringer Absorption.

Beide Ausführungsformen des erfindungsgemässen Verfahrens unter Verwendung der erfindungsgemässen Mikroküvetten-Anordnung 1 ermöglichen unterschiedliche Ausführungsvarianten.

So kann vorgesehen sein, dass in einem Flüssigkeitsvolumen 8, das sich zwischen den zwei in einer fixen Distanz 6 zueinander gehaltenen Küvettenflächen 3,5 der Mikroküvetten-Anordnung 1 befindet, eine oder zwei Messungen mit Licht einer oder zwei Wellenlängen, die innerhalb einer oder zwei Absorptionsbanden einer zu untersuchenden Probe liegen, ausgeführt werden. Besonders bevorzugt sind dabei Absorptionsmessungen mit Licht einer Wellenlänge im Bereich von 260 nm (der Absorptionsbande von Nukleinsäuren) und/oder mit Licht einer Wellenlänge im Bereich von 280 nm (der Absorptionsbande von Proteinen).

Wird in einem Flüssigkeitsvolumen 8 je eine Messung mit Licht einer Wellenlänge im Bereich von 260 nm und im Bereich von 280 nm ausgeführt, so kann das Verhältnis der beiden Absorptionswerte für dieses Flüssigkeitsvolumen 8 festgestellt und als Mass für die Reinheit der im Flüssigkeitsvolumen 8 vorhandenen Nukleinsäure genommen werden.

Zusätzlich zu den eben erwähnten einzelnen oder zweifachen Absorptionsmessungen werden vorzugsweise Referenzmessungen mit Licht einer Wellenlänge, die ausserhalb einer oder ausserhalb zweier Absorptionsbanden einer zu untersuchenden Probe liegt, z.B. mit Licht im nahen UV-Bereich mit Wellenlängen zwischen 300 und 400 nm ausgeführt. Je nach dem verwendeten Mikroplattenreader werden für solche Referenzmessungen - entsprechend den aktuellen Geräteeigenschaften -Wellenlängen im Bereich von beispielsweise 310 oder 315 nm speziell bevorzugt. Referenzmessungen mit Licht mit einer Wellenlänge von 400 bis 1000 nm sind ebenfalls bevorzugt.

Weil die zweite Teilplatte 4 der Mikroküvetten-Anordnung 1 oder eine Basisplatte 21 an einer zweiten Teilplatte 4 der Mikroküvetten-Anordnung 1 vorzugsweise eine Grundfläche 27 umfasst, die zumindest annähernd der Grundfläche einer Standardmikroplatte entspricht, so können die sich zwischen zwei in einer fixen Distanz 6 zueinander gehaltenen Küvettenflächen 3,5 einer Mikroküvetten-Anordnung 1 befindenden Flüssigkeitsvolumina 8 mit Licht eines Standard-Mikroplattenreaders 30 durchstrahlt werden.

Wie allgemein bekannt, sind die Konzentration einer in einem Flüssigkeitsvolumen gelösten Substanz und die optische Absorption dieses Flüssigkeitsvolumens über das Lambert-Beer'sche Gesetz (A = c * ε * *l*) mit einander verknüpft.

Dabei gelten:
A = optische Absorption
c = Konzentration des gelösten Stoffes [M = Mol/L]
ε = Molarer Extinktionskoeffizient des gelösten Stoffes [1/(M*cm)]
/ = Schichtdicke der Flüssigkeit oder Weglänge, die das Licht durchlaufen muss)[cm].

Durch das präzise Festlegen der Weglänge, d.h. der Distanz 6 zwischen den beiden Küvettenflächen 3,5 einer oder vieler Mikroküvetten 7 einer erfindungsgemässen Mikroküvetten-Anordnung 1 werden hochreproduzierbare Resultate erzielt.

Gleiche Merkmale oder Elemente der erfindungsgemässen Mikroküvetten-Anordnung 1 sind jeweils mit gleichen Bezugszeichen versehen, auch wenn diese Elemente nicht in allen Fällen im Detail beschrieben sind. Kombinationen der gezeigten bzw. beschriebenen Ausführungsformen gehören zum Umfang der vorliegenden Erfindung.

Alle beschriebenen Absorptionsmessungen in einem Standard-Mikroplattenreader und alle beschriebenen Transporte mit einem Roboter können automatisiert durchgeführt werden.

### Bezugszeichenliste:

- 1: Mikroküvetten-Anordnung
- 2: erste Teilplatte
- 3: erste Küvettenflächen
- 4: zweite Teilplatte
- 5: zweite Küvettenflächen
- 6: Distanz
- 7: Mikroküvetten
- 8: Flüssigkeitsvolumen
- 9: Öffnung in 2
- 10: transparenter Körper in 2
- 11: Öffnung in 4
- 12: transparenter Körper in 4
- 13: Spiegel
- 14: Rückseite des transparenten Körpers
- 15: Überstehmass
- 16: erste Oberflächen von 2,4
- 17: gebrochene Kante
- 18: Rücksprungmass
- 19: zweite Oberflächen von 2,4
- 20: Konus
- 21: Basisplatte
- 22: Aussparung
- 23: Gelenk
- 24: Distanzhalter
- 25: Führungsstifte
- 26: Vertiefungen
- 27: Grundfläche
- 28: Achse
- 29: Pipette
- 30: Mikroplattenreader
- 31: Liquidhandling System
- 32: Roboter
- 33: Robotergreifer
- 34: Kragen

- A: Eintrittsöffnung
- B: Austrittsöffnung
- C: Kragenmass
- D: Kragentiefe
- E: Höhe des transparenten Körpers
- F: Fase
- G: Zylinder
- H: Tropfenhöhe
- L: Licht

## Patentansprüche

1. Mikroküvetten-Anordnung (1), umfassend eine erste Teilplatte (2) mit einer oder mehreren ersten Küvettenflächen (3) und eine gegenüber der ersten anordenbare, zweite Teilplatte (4) mit mindestens einer oder mehreren zweiten Küvettenflächen (5), die in einer Aktivposition der Mikroküvetten-Anordnung (1) planparallel zu den ersten Küvettenflächen (3) im Register angeordnet und um eine Distanz (6) von diesen beabstandet sind, wodurch in der Aktivposition der Mikroküvetten-Anordnung (1) eine oder mehrere Mikroküvetten (7) ausgebildet sind, in denen je ein vorgängig auf eine der Küvettenflächen (3,5) aufgebrachtes Flüssigkeitsvolumen (8) zwischen diesen beiden Küvettenflächen (3,5) gehalten wird, **dadurch gekennzeichnet, dass** jede der ersten Küvettenflächen (3) der ersten Teilplatte (2) individuell und vollständig durch eine Oberfläche je eines transparenten, als freistrahloptisches Element ausgebildeten und in je einer die erste Teilplatte (2) durchdringenden Öffnung (9) angeordneten Körpers (10) gebildet ist.

2. Mikroküvetten-Anordnung (1) nach Anspruch 1, **dadurch gekennzeichnet, dass** jede der zweiten Küvettenflächen (5) der zweiten Teilplatte (4) individuell und vollständig durch eine Oberfläche je eines als freistrahloptisches Element ausgebildeten, in je einer die zweite Teilplatte (4) durchdringenden Öffnung (11) angeordneten, transparenten Körpers (12) gebildet ist.

3. Mikroküvetten-Anordnung (1) nach Anspruch 1, **dadurch gekennzeichnet, dass** jede der zweiten Küvettenflächen (5) der zweiten Teilplatte (4) individuell und vollständig durch eine Oberfläche je eines in der zweiten Teilplatte (4) angeordneten Spiegels (13) gebildet ist.

4. Mikroküvetten-Anordnung (1) nach Anspruch 3, **dadurch gekennzeichnet, dass** jeder Spiegel (13) an der Küvettenfläche (5) verspiegelt ist oder einen als freistrahloptisches Element ausgebildeten, transparenten Körper (12) umfasst, der eine verspiegelte Rückseite (14) aufweist.

5. Mikroküvetten-Anordnung (1) nach einem der vorhergehenden Ansprüche, **dadurch gekennzeichnet, dass** die transparenten Körper (10,12) aus einem Material gebildet sind, das aus einer Gruppe ausgewählt ist, welche Glas, Quarzglas, Kunststoff und Keramik umfasst.

6. Mikroküvetten-Anordnung (1) nach einem der vorhergehenden Ansprüche, **dadurch gekennzeichnet, dass** alle transparenten Körper (10,12) aus Quarzglas bestehen.

7. Mikroküvetten-Anordnung (1) nach einem der vorhergehenden Ansprüche, **dadurch gekennzeichnet, dass** die transparenten Körper (10,12) im wesentlichen zylindrisch ausgebildet sind, wobei die Küvettenflächen (3) der ersten Teilplatte (2) oder die Küvettenflächen (3,5) der ersten und zweiten Teilplatten (2,4) aus ersten Kreisflächen solcher Zylinder bestehen.

8. Mikroküvetten-Anordnung (1) nach einem der vorhergehenden Ansprüche, **dadurch gekennzeichnet, dass** die Küvettenflächen (3,5) der transparenten Körper (10,12) und der Spiegel (13) um ein Überstehmass (15) über an diese angrenzende, erste Oberflächen (16) der Teilplatten (2,4) herausstehen.

9. Mikroküvetten-Anordnung (1) nach einem der vorhergehenden Ansprüche, **dadurch gekennzeichnet, dass** die Küvettenflächen (3,5) der transparenten Körper (10,12) und der Spiegel (13) eine gebrochene Kante (17) aufweisen, die als umlaufende Fase oder Rundung ausgebildet ist.

10. Mikroküvetten-Anordnung (1) nach einem der vorhergehenden Ansprüche, **dadurch gekennzeichnet, dass** die transparenten Körper (10,12) so in den Teilplatten (2,4) montiert sind, dass ihre Rückseite (14) um ein Rücksprungmass (18) gegenüber einer zweiten Oberfläche (19) einer der beiden Teilplatten (2,4) abgesetzt ist.

11. Mikroküvetten-Anordnung (1) nach einem der vorhergehenden Ansprüche, **dadurch gekennzeichnet, dass** die transparenten Körper (10,12) eine Rückseite (14) umfassen, die eine Linsenform aufweist, wodurch auf die Rückseite (14) der transparenten Körper (10,12) eingestrahltes Licht auf dessen Küvettenfläche (3,5) konzentriert wird.

12. Mikroküvetten-Anordnung (1) nach einem der vorhergehenden Ansprüche, **dadurch gekennzeichnet, dass** sie eine Basisplatte (21) mit einer Aussparung (22) umfasst, wobei die zweite Teilplatte (4) als diese Aussparung (22) überspannend ausgebildet und an der Basisplatte (21) fixiert ist, und wobei die Küvettenflächen (3) der zweiten Teilplatte (4) im Bereich dieser Aussparung (22) angeordnet sind.

13. Mikroküvetten-Anordnung (1) nach einem der vorhergehenden Ansprüche, **dadurch gekennzeichnet, dass** die erste Teilplatte (2) und die zweite Teilplatte (4) über ein Gelenk (23) miteinander verbunden sind, mittels welchem eine dieser Teilplatten (2,4) zum Erstellen der Aktivposition der Mikroküvetten-Anordnung (1) auf die andere Teilplatte (4,2) schwenkbar ist.

14. Mikroküvetten-Anordnung (1) nach einem der Ansprüche 12 oder 13, **dadurch gekennzeichnet, dass** die erste und zweite Teilplatte (2,4) Distanzhalter (24) umfassen, welche so zum gegenseitigen Beaufschlagen ausgebildet sind, dass in der Aktivposition der Mikroküvetten-Anordnung (1) die fixe Distanz (6) zwischen allen einander gegenüber stehenden Küvettenflächen (3,5) einer Mikroküvetten-Anordnung (1) definiert ist.

15. Mikroküvetten-Anordnung (1) nach einem der Ansprüche 12 bis 14, **dadurch gekennzeichnet, dass** die zweite Teilplatte (4) Führungsstifte (25) umfasst, welche in der Aktivposition der Mikroküvetten-Anordnung (1) in entsprechende Vertiefungen (26) der ersten Teilplatte (2) eintauchend ausgebildet sind.

16. Mikroküvetten-Anordnung (1) nach einem der Ansprüche 12 bis 15, **dadurch gekennzeichnet, dass** die zweite Teilplatte (4) oder die Basisplatte (21) eine Grundfläche (27) aufweist, die zumindest annähernd der Grundfläche einer Standardmikroplatte entspricht.

17. Mikroküvetten-Anordnung (1) nach einem der vorhergehenden Ansprüche, **dadurch gekennzeichnet, dass** die erste Teilplatte (2) und die zweite Teilplatte (4) je eine regelmässige Anordnung von mehreren Küvettenflächen (3,5) umfassen.

18. Mikroküvetten-Anordnung (1) nach Anspruch 17, **dadurch gekennzeichnet, dass** diese regelmässigen Anordnungen von mehreren Küvettenflächen (3,5) als lineares Array mit 8 oder 12 Küvettenflächen (3,5) oder als ein ganzzahliges Vielfaches von solchen linearen, parallel zueinander angeordneten Arrays ausgebildet sind.

19. Verfahren zum Untersuchen von biologischen Proben mit einer Mikroküvetten-Anordnung (1), die eine erste Teilplatte (2) mit einer oder mehreren ersten Küvettenflächen (3) und eine gegenüber der ersten anordenbare, zweite Teilplatte (4) mit mindestens einer oder mehreren zweiten Küvettenflächen (5) umfasst, wobei mindestens ein zu untersuchendes Flüssigkeitsvolumen (8) auf eine der Küvettenflächen (3,5) aufgetragen und die andere Küvettenfläche (5,3) in Kontakt zu diesem Flüssigkeitsvolumen (8) gebracht wird, wonach beide Küvettenflächen (3,5) so in eine planparallele Position im Register und in einer Distanz (6) zueinander gebracht werden, dass in dieser Aktivposition der Mikroküvetten-Anordnung (1) mindestens eine Mikroküvette (7) gebildet wird, in der das Flüssigkeitsvolumen (8) zwischen diesen beiden Küvettenflächen (3,5) gehalten wird, **dadurch gekennzeichnet, dass** jede der ersten Küvettenflächen (3) der ersten Teilplatte (2) individuell und vollständig durch eine Oberfläche je eines als freistrahloptisches Element ausgebildeten, in je einer die erste Teilplatte (2) durchdringenden Öffnung (9) angeordneten, transparenten Körpers (10) gebildet ist, wobei jeweils einer dieser transparenten Körper (10) und das Flüssigkeitsvolumen (8), das sich zwischen den zwei in einer fixen Distanz (6) zueinander gehaltenen Küvettenflächen (3,5) befindet, mit Licht durchstrahlt werden.

20. Verfahren nach Anspruch 19, **dadurch gekennzeichnet, dass** jede der zweiten Küvettenflächen (5) der zweiten Teilplatte (4) individuell und vollständig durch eine Oberfläche je eines als freistrahloptisches Element ausgebildeten, in je einer die zweite Teilplatte (4) durchdringenden Öffnung (11) angeordneten, transparenten Körpers (12) gebildet ist, wobei jeweils beide transparenten Körper (10,12) und das Flüssigkeitsvolumen (8), das sich zwischen den zwei in einer fixen Distanz (6) zueinander gehaltenen Küvettenflächen (3,5) einer Mikroküvetten-Anordnung (1) befindet, mit Licht in einer Richtung durchstrahlt werden.

21. Verfahren nach Anspruch 19, **dadurch gekennzeichnet, dass** jede der zweiten Küvettenflächen (5) der zweiten Teilplatte (4) individuell und vollständig durch eine Oberfläche je eines in der zweiten Teilplatte (4) angeordneten Spiegels (13) gebildet ist, wobei jeweils zumindest ein transparenter Körper (10) und das Flüssigkeitsvolumen (8), das sich zwischen den zwei in einer fixen Distanz (6) zueinander gehaltenen Küvettenflächen (3,5) einer Mikroküvetten-Anordnung (1) befindet, mit Licht in zwei Dichtungen durchstrahlt werden.

22. Verfahren nach Anspruch 20 oder 21, **dadurch gekennzeichnet, dass** in einem Flüssigkeitsvolumen (8), das sich zwischen den zwei in einer fixen Distanz (6) zueinander gehaltenen Küvettenflächen (3,5) einer Mikroküvetten-Anordnung (1) befindet, eine oder zwei Messungen mit Licht einer oder zwei Wellenlängen, die innerhalb einer oder zwei Absorptionsbanden einer zu untersuchenden Probe liegen, ausgeführt werden.

23. Verfahren nach einem der Ansprüche 20 bis 22, **dadurch gekennzeichnet, dass** in einem Flüssigkeitsvolumen (8), das sich zwischen den zwei in einer fixen Distanz (6) zueinander gehaltenen Küvettenflächen (3,5) einer Mikroküvetten-Anordnung (1) befindet, eine Messung mit Licht einer Wellenlänge, die ausserhalb einer oder ausserhalb zweier Absorptionsbanden einer zu untersuchenden Probe liegt, ausgeführt wird.

24. Verfahren nach Anspruch 22 oder 23, **dadurch gekennzeichnet, dass** in einem Flüssigkeitsvolumen (8), das sich zwischen den zwei in einer fixen Distanz (6) zueinander gehaltenen Küvettenflächen (3,5) einer Mikroküvetten-Anordnung (1) befindet, je eine Messung mit Licht einer Wellenlänge im Bereich von 260 nm und im Bereich von 280 nm ausgeführt wird, wonach das Verhältnis der beiden Absorptionswerte für dieses Flüssigkeitsvolumen (8) festgestellt und als Mass für die Reinheit der im Flüssigkeitsvolumen (8) vorhandenen Nukleinsäure genommen wird.

25. Verfahren nach Anspruch 23 oder 24, **dadurch gekennzeichnet, dass** zum Erstellen eines Referenzmesswerts für ein Flüssigkeitsvolumen (8) die Wellenlänge des Lichts, die ausserhalb einer oder mehrerer Absorptionsbanden der zu untersuchenden Probe liegt, ausgewählt wird.

26. Verfahren nach einem der Ansprüche 20 bis 25, wobei die zweite Teilplatte (4) der Mikroküvetten-Anordnung (1) oder eine Basisplatte (21) an einer zweiten Teilplatte (4) der Mikroküvetten-Anordnung (1) eine Grundfläche (27) umfasst, **dadurch gekennzeichnet, dass**, diese Grundfläche (27) zumindest annähernd der Grundfläche einer Standardmikroplatte entspricht, wobei die sich zwischen zwei in einer fixen Distanz (6) zueinander gehaltenen Küvettenflächen (3,5) einer Mikroküvetten-Anordnung (1) befindenden Flüssigkeitsvolumina (8) mit Licht eines Standard-Mikroplattenreaders (30) durchstrahlt werden.

27. Verfahren nach einem der Ansprüche 20 bis 26, **dadurch gekennzeichnet, dass** zum Aufbringen der Flüssigkeitsvolumina (8) auf die Küvettenflächen (3,5) einer Teilplatte (2,4) einer Mikroküvetten-Anordnung (1) eine oder mehrere Pipetten (29) eines Liquidhandling Systems (31) verwendet wird, wobei das Liquidhandling System (31) vorzugsweise mit 8 oder 12 in einem linearen Array angeordneten Pipetten (29) ausgerüstet ist.

28. Verfahren nach einem der Ansprüche 20 bis 27, **dadurch gekennzeichnet, dass** zum Erstellen der Aktivposition einer Mikroküvetten-Anordnung (1) eine der beiden Teilplatten (2,4) dieser Mikroküvetten-Anordnung (1) ein Roboter (32) mit einem Robotergreifer (33) verwendet wird, wobei dieser Roboter (32) vorzugsweise zudem zum Transportieren und/oder Bereitstellen der Mikroküvetten-Anordnung (1) verwendet wird.

## Claims

1. Microcuvette arrangement (1), comprising a first partial plate (2) having one or more first cuvette surfaces (3), and a second partial plate (4), which is positionable in relation to the first partial plate, having at least one or more second cuvette surfaces (5), which are situated, in an active position of the microcuvette arrangement (1), plane-parallel in register to the first cuvette surfaces (3) and are spaced apart therefrom by a distance (6), whereby one or more microcuvettes (7) are implemented in the active position of the microcuvette arrangement (1), in each of which a liquid volume (8) predominantly applied to one of the cuvette surfaces (3, 5) is held between these two cuvette surfaces (3,5), **characterized in that** each of the first cuvette surfaces (3) of the first partial plate (2) is individually and completely formed in each case by one surface of a transparent body (10), which is implemented as a free beam optical element and is situated in an opening (9) penetrating the first partial plate (2).

2. Microcuvette arrangement (1) according to Claim 1, **characterized in that** each of the second cuvette surfaces (5) of the second partial plate (4) is individually and completely formed in each case by one surface of a transparent body (12), which is implemented as a free beam optical element and is situated in an opening (11) penetrating the second partial plate (4).

3. Microcuvette arrangement (1) according to Claim 1, **characterized in that** each of the second cuvette surfaces (5) of the second partial plate (4) is individually and completely formed in each case by one surface of a mirror (13) situated in the second partial plate (4).

4. Microcuvette arrangement (1) according to Claim 3, **characterized in that** each mirror (13) is mirrored on the cuvette surface (5) or comprises a transparent body (12) implemented as a free beam optical element, which has a mirrored rear side (14).

5. Microcuvette arrangement (1) according to one of the preceding claims, **characterized in that** the transparent bodies (10,12) are implemented from a material which is selected from a group which comprises glass, quartz glass, plastic, and ceramic.

6. Microcuvette arrangement (1) according to one of the preceding claims, **characterized in that** all transparent bodies (10,12) are from quartz glass.

7. Microcuvette arrangement (1) according to one of the preceding claims, **characterized in that** the transparent bodies (10,12) are implemented as essentially cylindrical, the cuvette surfaces (3) of the first partial plate (2) or the cuvette surfaces (3,5) of the first and second partial plates (2,4) consist of first circular surfaces of such cylinders.

8. Microcuvette arrangement (1) according to one of the preceding claims, **characterized in that** the cuvette surfaces (3,5) of the transparent bodies (10,12) and the mirror (13) protrude by an excess amount (15) beyond first surfaces (16) of the partial plates (2,4) adjoining them.

9. Microcuvette arrangement (1) according to one of the preceding claims, **characterized in that** the cuvette surfaces (3,5) of the transparent bodies (10,12) and the mirror (13) have a refracting edge (17), which is implemented as a peripheral chamfer or rounding.

10. Microcuvette arrangement (1) according to one of the preceding claims, **characterized in that** the transparent bodies (10,12) are mounted in the partial plates (2,4) in such a way that their rear side (14) is set back by a recess amount (18) in relation to a second surface (19) of one of the two partial plates (2,4).

11. Microcuvette arrangement (1) according to one of the preceding claims, **characterized in that** the transparent bodies (10,12) comprise a rear side (14), which has a lens shape, whereby light emitted onto the rear side (14) of the transparent body (10,12) is concentrated on the cuvette surface (3,5) thereof.

12. Microcuvette arrangement (1) according to one of the preceding claims, **characterized in that** it comprises a base plate (21) having a recess (22), the second partial plate (4) being implemented as spanning this recess (22) and being fixed on the base plate (21), and the cuvette surfaces (3) of the second partial plate (4) being situated in the area of this recess (22).

13. Microcuvette arrangement (1) according to one of the preceding claims, **characterized in that** the first partial plate (2) and the second partial plate (4) are connected to one another via a joint (23), using which one of these partial plates (2,4) is pivotable to create the active position of the microcuvette arrangement (1) on the other partial plate (4,2).

14. Microcuvette arrangement (1) according to one of the Claims 12 or 13, **characterized in that** the first and second partial plates (2,4) comprise spacers (24), which are implemented for mutual application, so that, in the active position of the microcuvette arrangement (1), the fixed distance (6) between all opposing cuvette surfaces (3,5) of a microcuvette arrangement (1) is defined.

15. Microcuvette arrangement (1) according to one of the Claims 12 to 14, **characterized in that** the second partial plate (4) comprises guide pins (25), which are implemented to plunge into corresponding depressions (26) of the first partial plate (2) in the active position of the microcuvette arrangement (1).

16. Microcuvette arrangement (1) according to one of the Claims 12 to 15, **characterized in that** the second partial plate (4) or the base plate (21) has a footprint (27) which at least approximately corresponds to the footprint of a standard microplate.

17. Microcuvette arrangement (1) according to one of the preceding claims, **characterized in that** the first partial plate (2) and the second partial plate (4) each comprise a regular arrangement of multiple cuvette surfaces (3,5).

18. Microcuvette arrangement (1) according to Claim 17, **characterized in that** these regular arrangements of multiple cuvette surfaces (3,5) are implemented as a linear array having 8 or 12 cuvette surfaces (3,5) or as an integral multiple of such linear arrays situated parallel to one another.

19. Method for studying biological samples using a microcuvette arrangement (1), which comprises a first partial plate (2) having one or more first cuvette surfaces (3) and a second partial plate (4), which is positionable in relation to the first partial plate, having at least one or more second cuvette surfaces (5), at least one liquid volume (8) to be studied being applied to one of the cuvette surfaces (3,5) and the other cuvette surface (5,3) being brought into contact with this liquid volume (8), after which both cuvette surfaces (3,5) are brought into a plane-parallel position in register and at a distance (6) to one another so that, in this active position of the microcuvette arrangement (1), at least one microcuvette (7) is formed, in which the liquid volume (8) is held between these two cuvette surfaces (3,5), **characterized in that** each of the first cuvette surfaces (3) of the first partial plate (2) is individually and completely formed in each case by one surface of a transparent body (10) implemented as a free beam optical element and situated in an opening (9) penetrating the first partial plate (2), in each case light being transmitted through one of these transparent bodies (10) and the liquid volume (8), which is located between the two cuvette surfaces (3,5) held at a fixed distance (6) to one another.

20. Method according to Claim 19, **characterized in that** each of the second cuvette surfaces (5) of the second partial plate (4) is individually and completely formed by one surface of a transparent body (12) implemented in each case as a free beam optical element and situated in each case in one opening (11) penetrating the second partial plate (4), in each case light being transmitted through both transparent bodies (10,12) and the liquid volume (8), which is located between the two cuvette surfaces (3,5) of a microcuvette arrangement (1), which are held at a fixed distance (6) to one another.

21. Method according to Claim 19, **characterized in that** each of the second cuvette surfaces (5) of the second partial plate (4) is individually and completely formed by one surface of one mirror (13) situated in the second partial plate (4), light being transmitted in two directions in each case through at least one transparent body (10) and the liquid volume (8), which is located between the two cuvette surfaces (3,5) of a microcuvette arrangement (1), which are held at a fixed distance (6) to one another.

22. Method according to Claim 20 or 21, **characterized in that** one or two measurements are executed using light of one or two wavelengths, which are within one or two absorption bands of a sample to be studied, in a liquid volume (8), which is located between the two cuvette surfaces (3,5) of a microcuvette arrangement (1), which are held at a fixed distance (6) to one another.

23. Method according to one of the Claims 20 to 22, **characterized in that** a measurement is executed using light of one wavelength, which is outside one or outside two absorption bands of a sample to be studied, in a liquid volume (8), which is located between the two cuvette surfaces (3,5) of a microcuvette arrangement (1), which are held at a fixed distance (6) to one another.

24. Method according to Claim 22 or 23, **characterized in that** one measurement is executed in each case using light of a wavelength in the range of 260 nm and in the range of 280 nm in a liquid volume (8), which is located between the two cuvette surfaces (3,5) of a microcuvette arrangement (1), which are held at a fixed distance (6) to one another, after which the ratio of the two absorption values for this liquid volume (8) is established and taken as a measure of the purity of the nucleic acid present in the liquid volume (8).

25. Method according to Claim 23 or 24, **characterized in that** the wavelength of the light which is outside one or more absorption bands of the sample to be studied is selected to create a reference measured value for a liquid volume (8).

26. Method according to one of the Claims 20 to 25, the second partial plate (4) of the microcuvette arrangement (1) or a baseplate (21) on a second partial plate (4) of the microcuvette arrangement (1) comprising a footprint (27), **characterized in that** this footprint (27) at least approximately corresponds to the footprint of a standard microplate, light of a standard microplate reader (30) being transmitted through the liquid volumes (8) located between the two cuvette surfaces (3,5) of a microcuvette arrangement (1), which are held at a fixed distance (6) to one another.

27. Method according to one of the Claims 20 to 26, **characterized in that** one or more pipettes (29) of a liquid handling system (31) are used to apply the liquid volume (8) to the cuvette surfaces (3,5) of a partial plate (2,4) of a microcuvette arrangement (1), the liquid handling system (31) preferably being equipped with 8 or 12 pipettes (29) arranged in a linear array.

28. Method according to one of the Claims 20 to 27, **characterized in that** a robot (32) having a robot gripper (33) is used to create the active position of a microcuvette arrangement (1) of one of the two partial plates (2,4) of this microcuvette arrangement (1), this robot (32) preferably additionally being used for transporting and/or providing the microcuvette arrangement (1).

## Revendications

1. Structure de microcuvettes (1), comprenant une première plaque partielle (2) présentant une ou plusieurs premières surfaces de cuvettes (3), et une seconde plaque partielle (4) pouvant être disposée à l'opposé de la première et comportant au moins une ou plusieurs secondes surfaces de cuvettes (5), qui sont disposées dans une position active de la structure de microcuvettes (1) parallèlement aux premières surfaces de cuvettes (3) dans un repère et sont éloignées de celles-ci d'une distance (6), suite à quoi dans la position active de la structure de microcuvettes (1) sont formées une ou plusieurs microcuvettes (7) dans lesquelles sont maintenues respectivement un volume de fluide (8) appliqué on amont sur une des surfaces de cuvettes (3,5) entre ces deux surfaces de cuvettes (3,5), **caractérisée en ce que** chacune des premières surfaces de cuvettes (3) de la première plaque partielle (2) est formée de façon individuelle et entièrement par une surface d'un corps transparent (10), exécuté en tant qu'élément à rayonnement libre sur le plan optique et disposé dans une ouverture respective (9) traversant de la première plaque partielle (2).

2. Structure de microcuvettes (1) selon la revendication 1, **caractérisée en ce que** chacune des secondes surfaces de cuvettes (5) de la seconde plaque partielle (4) est formée individuellement et entièrement par une surface de respectivement un corps transparent (12) exécuté en tant qu'élément à rayonnement libre sur le plan optique et disposé dans une ouverture respective (11) traversant la seconde plaque partielle (4).

3. Structure de microcuvettes (1) selon la revendication 1, **caractérisée en ce que** chacune des secondes surfaces de cuvettes (5) de la seconde plaque partielle (4) est formée individuellement et entièrement par une surface d'un miroir (13) respectif disposé dans la seconde plaque partielle (4).

4. Structure de microcuvettes (1) selon la revendication 3, **caractérisé en ce que** chaque miroir (13) est argenté au niveau de la surface de cuvette (5) ou comporte un corps (12) transparent exécuté en tant qu'élément à rayonnement libre sur le plan optique qui présente une face arrière (14) argentée.

5. Structure de microcuvettes (1) selon l'une des revendications précédentes, **caractérisée en ce que** les corps transparents (10,12) sont formés d'un matériau qui est sélectionné dans le groupe qui comprend le verre, le verre quartzeux, le plastique et la céramique.

6. Structure de microcuvettes (1) selon l'une des revendications précédentes, **caractérisée en ce que** tous les corps transparents (10,12) se composent de verre quartzeux.

7. Structure de microcuvettes (1) selon l'une des revendications précédentes, **caractérisée en ce que** les corps transparents (10,12) sont exécutés de façon essentiellement cylindrique, les surfaces de cuvettes (3) de la première plaque partielle (2) ou les surfaces de cuvettes (3,5) des première et seconde plaques partielles (2,4) se composant de premiers disques de tels cylindres.

8. Structure de microcuvettes (1) selon l'une des revendications précédentes, **caractérisée en ce que** les surfaces de cuvettes (3,5) des corps transparents (10,12) et le miroir (13) dépassent d'une dimension de saillie (15) au-dessus des premières surfaces contiguës à celles-ci (16) des plaques partielles (2,4).

9. Structure de microcuvettes (1) selon l'une des revendications précédentes, **caractérisée en ce que** les surfaces de cuvettes (3,5) des corps transparents (10,12) et le miroir (13) présentent une arête coupée (17) qui est exécutée en tant que chanfrein ou bordure périphérique.

10. Structure de microcuvettes (1) selon l'une des revendications précédentes, **caractérisée en ce que** les corps transparents (10,12) sont montés dans les plaques partielles (2,4) de façon telle que leur face arrière (14) est décalée d'une dimension de retrait (18) par rapport à une seconde surface (19) d'une des deux plaques partielles (2,4).

11. Structure de microcuvettes (1) selon l'une des revendications précédentes, **caractérisée en ce que** les corps transparents (10,12) comportent une face arrière (14) qui présente une forme de lentille, par laquelle de la lumière entrant sur la face arrière (14) des corps transparents (10,12) est concentrée sur la surface de cuvette (3,5).

12. Structure de microcuvettes (1) selon l'une des revendications précédentes, **caractérisée en ce qu'**elle comprend une plaque de base (21) présentant un évidement (22), la seconde plaque partielle (4) étant exécutée pour enjamber cet évidement (22) et étant fixée sur la plaque de base (21), et dans laquelle les surfaces de cuvettes (3) de la seconde plaque partielle (4) sont disposées dans la zone de cet évidement (22).

13. Structure de microcuvettes (1) selon l'une des revendications précédentes, **caractérisée en ce que** la première plaque partielle (2) et la seconde plaque partielle (4) sont reliées ensemble par une articulation (23), au moyen de laquelle une de ces plaques partielles (2,4) peut pivoter sur l'autre plaque partielle (4,2) pour réaliser la position active de la structure de microcuvettes (1).

14. Structure de microcuvettes (1) selon l'une des revendications 12 ou 13, **caractérisée en ce que** la première et la seconde plaques partielles (2,4) comportent des entretoises (24) qui sont conçues pour une alimentation mutuelle telle que dans la position active de la structure de microcuvettes (1) est définie la distance fixe (6) entre toutes les surfaces de cuvettes se faisant face (3,5) d'une structure de microcuvettes (1).

15. Structure de microcuvettes (1) selon l'une des revendications 12 à 14, **caractérisée en ce que** la seconde plaque partielle (4) comporte des tiges de guidage (25) qui sont exécutées de façon à plonger dans des renfoncements (26) correspondants de la première plaque partielle (2) dans la position active de la structure de microcuvettes (1).

16. Structure de microcuvettes (1) selon l'une des revendications 12 à 15, **caractérisée en ce que** la seconde plaque partielle (4) ou la plaque de base (21) présente une surface de base (27) qui correspond au moins approximativement à la surface de base d'une plaque de microtitration standard.

17. Structure de microcuvettes (1) selon l'une des revendications précédentes, **caractérisée en ce que** la première plaque partielle (2) et la seconde plaque partielle (4) comportent respectivement un agencement régulier de plusieurs surfaces de cuvettes (3,5).

18. Structure de microcuvettes (1) selon la revendication 17, **caractérisée en ce que** ces agencements réguliers de plusieurs surfaces de cuvettes (3,5) sont exécutés en tant que matrice linéaire de 8 ou de 12 surfaces de cuvettes (3,5) ou en tant que multiple entier de telles matrices linéaires disposées parallèlement les unes aux autres.

19. Procédé d'analyse d'échantillons biologiques avec une structure de microcuvettes (1) qui comporte une première plaque partielle (2) présentant une ou plusieurs surfaces de cuvettes (3) et une seconde plaque partielle (4) pouvant être disposée à l'opposé de la première et présentant au moins une ou plusieurs secondes surfaces de cuvettes (5), dans lequel au moins un volume de fluide à analyser (8) est appliqué sur une des surfaces de cuvettes (3,5) et l'autre surface de cuvette (5,3) est mise en contact avec ce volume de liquide (8), suite à quoi les deux surfaces de cuvettes (3,5) sont appliquées dans une position parallèle dans le repère et à une distance (6) l'une de l'autre de façon telle que dans cette position active de la structure de microcuvettes (1) est formée au moins une cuvette de microtitration (7) dans laquelle le volume de fluide (8) est retenu entre ces deux surfaces de cuvettes (3,5), **caractérisé en ce que** chacune des premières surfaces de cuvettes (3) de la première plaque partielle (2) est formée individuellement et entièrement par une surface de respectivement un corps transparent (10) exécuté en tant qu'élément à rayonnement libre sur le plan optique, disposé dans respectivement une ouverture traversant la première plaque partielle (2), suite à quoi respectivement un de ces corps transparents (10) et le volume de fluide (8) qui se trouve entre les deux surfaces de cuvettes (3,5) maintenues l'une par rapport à l'autre à une distance fixe (6) sont irradiés par de la lumière.

20. Procédé selon la revendication 19, **caractérisé en ce que** chacune des deux surfaces de cuvettes (5) de la seconde plaque partielle (4) est formée individuellement et entièrement par une surface de respectivement un corps transparent (12) exécuté en tant qu'élément à rayonnement libre sur le plan optique disposé dans respectivement une ouverture (11) traversant la seconde plaque partielle (4), suite à quoi les deux corps transparents (10,12) et le volume de liquide (8) qui se trouve entre les deux surfaces de cuvettes (3,5) de la structure de microcuvettes (1) maintenues l'une par rapport à l'autre à une distance fixe (6) sont respectivement irradiés avec de la lumière dans une direction.

21. Procédé selon la revendication 19, **caractérisé en ce que** chacune des deux surfaces de cuvettes (5) de la seconde plaque partielle (4) est formée individuellement et entièrement par une surface respectivement d'un miroir (13) disposé dans la seconde plaque partielle (4), suite à quoi au moins un corps transparent (10) et le volume de fluide (8) qui se trouve entre les deux surfaces de cuvettes (3,5) de la structure de microcuvettes (1) maintenues l'une par rapport à l'autre à une distance fixe (6) sont irradiés avec de la lumière dans deux directions.

22. Procédé selon la revendication 20 ou 21, **caractérisé en ce que** dans un volume de fluide (8) qui se trouve entre les deux surfaces de cuvettes (3,5) d'une structure de microcuvettes (1) maintenues l'une par rapport à l'autre à une distance fixe (6), on exécute une ou deux mesures avec de la lumière d'une ou de deux longueurs d'onde qui se trouve(nt) au sein d'une ou de deux bandes d'absorption d'un échantillon à analyser.

23. Procédé selon l'une des revendications 20 à 22, **caractérisé en ce que** dans un volume de fluide (8) qui se trouve entre les deux surfaces de cuvettes (3,5) d'une structure de microcuvettes (1) maintenues l'une par rapport à l'autre à une distance fixe (6), on exécute une mesure avec de la lumière d'une longueur d'onde qui se trouve en-dehors d'une ou en-dehors de deux bandes d'absorption d'un échantillon à analyser.

24. Procédé selon la revendication 22 ou 23, **caractérisé en ce que** dans un volume de fluide (8) qui se trouve entre les deux surfaces de cuvettes (3,5) d'une structure de microcuvettes (1) maintenues l'une par rapport à l'autre à une distance fixe (6), on exécute respectivement une mesure avec de la lumière d'une longueur d'onde dans la plage de 260 nm et dans la plage de 280 nm, suite à quoi le rapport entre les deux valeurs d'absorption pour ce volume de fluide (8) est déterminé et pris en tant que mesure de la pureté de l'acide nucléique existant dans le volume de fluide (8).

25. Procédé selon la revendication 23 ou 24, **caractérisé en ce que**, pour déterminer une valeur de mesure de référence pour un volume de fluide (8), on sélectionne la longueur d'onde de la lumière qui se trouve en-dehors d'une ou de plusieurs bandes d'absorption de l'échantillon à analyser.

26. Procédé selon l'une des revendications 20 à 25, dans lequel la seconde plaque partielle (4) de la structure de microcuvettes (1) ou une plaque de base (21) au niveau d'une seconde plaque partielle (4) de la structure de microcuvettes (1) comporte une surface de base (27), **caractérisé en ce que** cette surface de base (27) correspond au moins approximativement à la surface de base d'une plaque de microtitration standard, suite à quoi les volumes de fluide (8) qui se trouvent entre les surfaces de cuvettes (3,5) d'une structure de microcuvettes (1), maintenues à une distance fixe (6), sont irradiés avec de la lumière d'un lecteur standard de plaques de microtitration (30).

27. Procédé selon l'une des revendications 20 à 26, **caractérisé en ce que**, pour appliquer des volumes de fluide (8) sur les surfaces de cuvettes (3,5) d'une plaque partielle (2,4) d'une structure de microcuvettes (1), on utilise une ou plusieurs pipettes (29) d'un système de manipulation de fluide (31), le système de manipulation de fluide (31) étant de préférence équipé de 8 ou de 12 pipettes (29) disposées dans une matrice linéaire.

28. Procédé selon l'une des revendications 20 à 27, **caractérisé en ce que**, pour déterminer la position active d'une structure de microcuvettes (1) une des deux plaques partielles (2,4) de cette structure de microcuvettes (1), on utilise un robot (32) équipé d'une pince de robot (33), ce robot (32) étant de préférence utilisé en outre pour le transport et/ou la préparation de la structure de microcuvettes (1).
